# EUROPÄISCHE PATENTSCHRIFT

(11) **EP 1 298 772 B1**
(45) Veröffentlichungstag und Bekanntmachung des Hinweises auf die Patenterteilung: **18.01.2006**
(21) Anmeldenummer: 02017981.8
(22) Anmeldetag: 10.08.2002
(51) Int. Cl.: H02K 1/14, H02K 5/16, H02K 1/18

(54) **Aussenläufermotor**
Outer rotor motor
Moteur à rotor extérieur

(30) Priorität: 29.09.2001 DE 20116068 U
(43) Veröffentlichungstag der Anmeldung: 02.04.2003
(73) Patentinhaber: ebm-papst Mulfingen GmbH & Co.KG, 74673 Mulfingen (DE)
(72) Erfinder: Müller, Werner, Dipl.-Ing. (FH), 74673 Mulfingen (DE)
(74) Vertreter: Patentanwälte Dr. Solf & Zapf

(56) Entgegenhaltungen:
- EP-A- 0 064 846
- EP-A- 1 076 398
- US-A- 4 602 957
- US-A- 5 128 574
- US-A- 5 198 137
- US-A- 5 853 513
- US-B1- 6 251 514
- PATENT ABSTRACTS OF JAPAN vol. 010, no. 255 (E-433), 2. September 1986 (1986-09-02) & JP 61 084006 A (HITACHI LTD), 28. April 1986 (1986-04-28)

## Beschreibung

Die vorliegende Erfindung betrifft einen Außenläufermotor, wie einen kollektorlosen Gleichstrom-Außenläufermotor, mit einem Stator und mit einem den Stator umschließenden Rotor, wobei der Stator einen zentrisch angeordneten Grundkörper aufweist, von dem radial nach außen weisende Wicklungsträger ausgehen und mit dem ein Lagertragrohr zur Befestigung eines Motorflansches verbunden ist, weiches in seinem Inneren eine Welle des Rotors aufnimmt sowie innenseitig Lageraufnahmen zur Fixierung von Lagerelementen, wie Ringen von Gleitlagern oder Wälzlagern, aufweist, wobei der zentrische Grundkörper des Stators das Lagertragrohr und die Wicklungsträger einstückig aus einem weichmagnetischen Pulver-Verbundwerkstoff hergestellt sind, wobei an den speichenartig radial nach außen weisenden Wicklungsträgern im Wesentlichen umfangsgemäß verlaufende Endabschnitte angeformt sind, die einstückig mit den Wicklungsträgern aus dem weichmagnetischen Pulver-Verbundwerkstoff hergestellt sind und zusammen mit den Wicklungsträgern Statorzähne bilden, wobei eine axiale Höhe der speichenartig radial nach außen weisenden Wicklungsträger jeweils in einem mittleren Bereich geringer als in einem radial inneren Bereich und/oder in einem radial äußeren Bereich ausgebildet ist.

Aus der EP 0 769 840 B1 ist ein Außenläufermotor bekannt, der im Wesentlichen aus einem Statorflansch, einem an diesem befestigten Stator, einem den Stator auf seiner dem Statorflansch abgekehrten Seite umschließenden Außenläufer sowie einem zwischen dem Statorflansch und dem Außenläufer angeordneten Elektronikmodul besteht. Der Statorflansch ist über ein Lagertragrohr mit dem Stator verbunden. Der Stator besteht in herkömmlicher Weise im Wesentlichen aus einem Statorblechpaket sowie verschiedenen Statorwicklungen, die mittels einer statorseitigen und einer rotorseitigen Isolierendscheibe gegenüber dem Statorblechpaket isoliert sind. Für die Montage wird der Stator mit seinem Statorblechpaket auf das Lagertragrohr aufgeschoben und mit diesem vorzugsweise verpresst. Das den Stator tragende Lagertragrohr ist an seiner dem Statorflansch zugekehrten Seite mit diesem verbunden, vorzugsweise verschraubt. Der Außenläufer (Rotor) besteht aus einem glockenartigen, den Stator umschließenden Rotorgehäuse, das über eine Rotorwelle in Kugellagern gelagert ist, die jeweils endseitig im Lagertragrohr eingepresst sind. Auf der Innenseite des Rotorgehäuses ist ein Dauermagnet angeordnet, der das Statorblechpaket rotationssymmetrisch umschließt.

Im Gegensatz zum Aufbau dieses bekannten Motors ist aus der DE 41 05 352 A1 eine elektrische Maschine bekannt, die einen sich drehenden Rotor und einen Stator aufweist, der die Wicklung trägt, wobei der Rotor und/oder der Stator als Metallpulverpressteil ausgebildet ist/sind. Der Pulververbundwerkstoff des Metallpulverpresseils besteht im wesentlichen aus weichmagnetischen, allseitig mit einer dünnen elektrisch isolierenden Schicht versehenen, hochpermeablen Metallteilchen und aus Bindemitteln sowie aus 0,1 bis 8,0 Gewichtsprozent Glasfasern, Kohlefasern, Keramikfasem oder Kunststoffasern. Durch diesen Aufbau soll mit einfachen Mitteln bei geringen elektromagnetischen Verlusten erreicht werden, dass die elektrische Maschine hohe mechanische Belastungen aufzunehmen vermag.

Aus der DE 36 07 452 A1 ist ein Stator für einen Schrittmotor oder einen Synchronmotor bekannt, der im Wesentlichen aus einem Eisenpulver-Kunststoffgemisch besteht, wobei das Eisenpulver inhomogen verteilt und insbesondere in den Polzähnen sowie den magnetischen Rückschlüssen konzentriert ist. Dies kann bei der Herstellung durch den äußeren Einfluß eines entsprechend ausgerichteten Magnetfeldes erfolgen, so lange das Eisenpulver-Kunststoffgemisch noch verformbar ist. Zusätzlich können als Kombinationsmaßnahme an einer entsprechenden Form zur Aufnahme des EisenpulverKunststoffgemisches im Bereich der Polzähne sowie der magnetischen Rückschlüsse Austrittsöffnungen für Eisenpulver bzw. ein mit Eisenpulver stark angereichertes Gemisch aus Kunststoff und Eisenpulver und im übrigen Bereich Austrittsöffnungen für zumindest weitgehend Eisenpulverfreien Kunststoff vorgesehen sein. Ein kompletter, insbesondere aus drei Hauptteilen bestehender Stator kann dabei gleichzeitig im wesentlichen auch das Motorgehäuse bilden.

Des weiteren ist aus der DE 696 01 371 T2 eine recyclebare elektrische Maschine bekannt, die mindestens ein Poljoch- oder ein Ankerskelett aufweist, das eine Leiterwicklung trägt, wobei das Skelett in einem in Bruchstücke zerbröckelbaren Material gefertigt ist, das beim Recyclingvorgang durch die Windungen der Wicklung hindurch abfließen kann. Dieses zerbröckelbare Material besteht in bevorzugter Ausführung zu 98,0 bis 99,5 Gewichtsprozent aus Eisenpulver und aus einem Restanteil Bindemittel auf der Basis eines organischen Harzes.

Aus DE 36 03 061 A1 ist ein Verfahren zur Herstellung eines weichmagnetischen Verbundwerkstoffes bekannt, bei dem Pulverpartikel aus einem weichmagnetischen metallischen Werkstoff nach dem Sol-Gel-Prozeß mit einem dünnen elektrisch isolierenden Glasfilm beschichtet und das beschichtete rieselfähige Pulver bei erhöhter Temperatur verdichtet wird. Für den Glasfilm erfolgt eine Auswahl spezifischer bindender und gut haftender Glassorten auf Silikatbasis. Als bevorzugte weichmagnetische Werkstoffe werden Carbonyleisen sowie Eisenlegierungen mit Silicium, Aluminium und/oder Nickel genannt.

Die Vorteilhaftigkeit der Verwendung von weichmagnetischen Verbundwerkstoffen, die auch als SMC-Material (Soft Magnetic Composite) bezeichnet werden, bei der Herstellung von elektrischen Maschinen und Maschinenteilen wird unter anderem auch in der WO 99/08363 A1 und in der WO 00/69047 A1 sowie in dem wissenschaftlichen Artikel "Permanentmagnet machines with powdered iron cores and prepressed windings" von A.G. Jack u.a. (IEEE Transactions on industry applications, Bd. 36, Nr. 4, Juli/August 2000, S. 1077-1083) beschrieben.

Aus der US 5 853 513 ist ein Außenläufermotor der gattungsgmäßen Art und aus der US 5 128 574 ein ähnlicher Motor bekannt, bei dem jedoch an den speichenartig radial nach außen weisenden Wicklungsträgern keine im wesentlichen umfangsgemäß verlaufende Endabschnitte angeformt sind, die zusammen mit den Wicklungsträgern Statorzähne bilden. Bei diesen Motoren ist somit die Verwendung von magnetischen Verbundwerkstoffen bereits vorgesehen.

Der Erfindung liegt die Aufgabe zu Grunde, die Vorteilhaftigkeit der Verwendung von weichmagnetischen Verbundwerkstoffen für einen Außenläufermotor der eingangs beschriebenen Art derart weitergehend nutzbar zu machen, dass bei hoher (bzw. verbesserter) Funktionserfüllung eine gegenüber dem Stand der Technik vereinfachte Fertigung erreicht wird.

Erfindungsgemäß wird das dadurch erreicht, dass das Lagertragrohr an einer Stirnseite domartig vom Grundkörper des Stators abragt, wobei das Lagertragrohr Abstützelemente für ein zwischen dem Stator und dem Motorflansch angeordnetes Elektronikmodul ausbildet.

Durch die Erfindung ergeben sich dabei für einen Außenläufermotor der eingangs genannten Art die folgenden Vorteile:
- Durch die einstückige Fertigung des Lagertragrohr/Stator-Verbundes können Montageschritte eingespart werden.
- Bei einer insbesondere preßtechnischen, auf pulvermetallurgischen Verfahren basierenden Herstellung von innenseitig des Tragrohres angeordneten Lageraufnahmen zur Fixierung von Lagerelementen, wie Ringen von Gleitlagern oder Wälzlagern, kann eine so große Genauigkeit erreicht werden kann, daß eine spanende Bearbeitung der Lageraufnahmen bzw. -sitze unterbleiben kann. Es ist allenfalls noch eine Rollierung der Lagersitze erforderlich.
- Innenkanten und Außenkanten am Grundkörper des Stators, an Wicklungsträgern des Stators und/oder an umfangsgemäß verlaufenden Endabschnitten von Statorzähne können im Querschnitt gesehen verrundet hergestellt werden. Dadurch wird einer Beschädigung der Wickeldrähte vorgebeugt, da eine Reduzierung der mechanischen Belastung der Wickeldrähte erfolgt.
- Aus den im Querschnitt gesehen abgerundeten Kanten resultiert auch eine Verringerung der elektrischen Feldstärke, was vorteilhafterweise zu einer erhöhten Spannungsfestigkeit führt. Deshalb kann bei Niederspannungsmotoren auf eine Isolation zwischen Wicklung und Statorpaket verzichtet werden.

Weitere Merkmale der Erfindung sowie deren Vorteile, wie beispielsweise die Möglichkeit, einen erfindungsgemäßen Außenläufermotor in kompakterer Bauweise als den bekannten, herkömmlichen Motor herzustellen, ergeben sich aus den Unteransprüchen bzw. sind in der nachfolgenden Figurenbeschreibung genauer erläutert. Dabei zeigen:
- Fig. 1: eine perspektivische Explosionsdarstellung eines erfindungsgemäßen Außenläufermotors,
- Fig. 2 und 3: eine perspektivische Draufsicht und eine perspektivische Unteransicht der in Fig. 1 dargestellten Stator-Tragrohr-Einheit des erfindungsgemäßen Motors,
- Fig. 4: eine perspektivische Draufsicht auf eine im Vergleich mit der Darstellung in Fig. 1 mit zusätzlichen Teilen versehene Stator-Tragrohr-Einheit des erfindungsgemäßen Motors.

In den verschiedenen Figuren der Zeichnung sind gleiche und sich funktionell entsprechende Teile stets mit denselben Bezugszeichen versehen, so daß sie in der Regel auch nur einmal beschrieben werden.

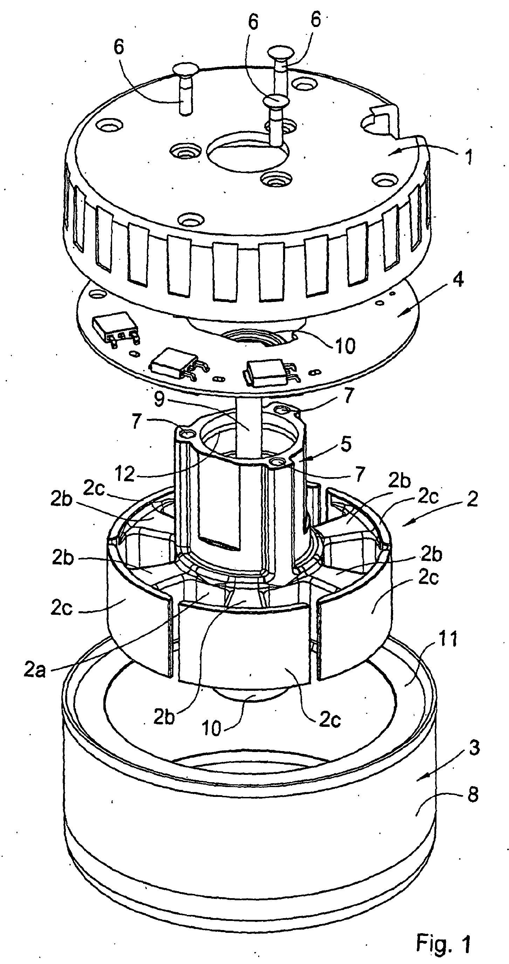

Fig. 1 zeigt beispielhaft einen erfindungsgemäßen kollektorlosen Gleichstrom-Außenläufermotor. Der Motor besteht im wesentlichen aus einem Motorflansch 1, einem an diesem befestigbaren Stator 2, einem den Stator 2 auf seiner dem Motorflansch 1 abgekehrten Seite umschließenden Außenläufer (Rotor 3) sowie einem zwischen dem Motorflansch 1 und dem Rotor 3 angeordneten Elektronikmodul 4.

Der Motorflansch 1 ist über ein Lagertragrohr 5 mit dem Stator 2 verbindbar. Vorzugsweise ist das Lagertragrohr 5 an seiner dem Motorflansch 1 zugekehrten Seite mit dem Motorflansch 1 verschraubt, wozu die in der Zeichnung dargestellten Schrauben 6 dienen. Komplementär zu den Schrauben 6 weist das Lagertragrohr 5 zur Befestigung des Motorflansches 1 von seiner Stirnseite ausgehende, insbesondere mit einem Gewinde versehene, Kembohrungen 7 auf.

Das zwischen dem Stator 2 und dem Motorflansch 1 angeordnete Elektronikmodul 4 besteht im wesentlichen aus einer Leiterplatte, auf der eine elektronische Schaltungsanordnung für die Kommutierung von nicht dargestellten Statorwicklungen angeordnet ist, sowie optional aus weiteren Bauteilen, wie z.B. einem Kühlkörper, einem Anschlußteil zur Herstellung einer elektrischen Verbindung eines Hallgenerators mit der Leiterplatte, usw..

Der Außenläufer 3 besteht in bekannter Weise aus einem glockenartigen, den Stator 2 umschließenden Rotorgehäuse 8, das über eine Rotorwelle 9 in Lagerelementen 10, wie Kugellagern oder Wälzlagern, die im Montagezustand jeweils endseitig im Lagertragrohr 5 sitzen, gelagert ist. Auf der Innenseite des Rotorgehäuses 8 ist ein Dauermagnet 11 angeordnet, der den Stator 2 in Rotationsrichtung umschließt.

Erfindungsgemäß weist der Stator 2 einen zentrischen ringförmigen Grundkörper 2a auf, der zusammen mit dem Lagertragrohr 5 einstückig aus einem weichmagnetischen Pulver-Verbundwerkstoff hergestellt ist. Das Lagertragrohr 5 ragt dabei domartig an einer Stirnseite vom Grundkörper 2a des Stators 2 ab.

Von dem zentrisch angeordneten Grundkörper 2a des Stators 2 gehen speichenartig radial nach außen weisende Wicklungsträger 2b aus, die ebenfalls einstückig mit dem zentrischen Grundkörper 2a des Stators 2 aus dem weichmagnetischen Pulver-Verbundwerkstoff hergestellt sind.

An den speichenartig radial nach außen weisenden Wicklungsträgern 2b sind im wesentlichen umfangsgemäß verlaufende Endabschnitte 2c angeformt. Auch diese Endabschnitte, die sogenannten Polschuhe, sind einstückig mit den Wicklungsträgern 2b bzw. dem Grundkörper 2a aus dem weichmagnetischen Pulver-Verbundwerkstoff hergestellt und bilden zusammen mit den Wicklungsträgern 2b im einzelnen nicht näher bezeichnete Statorzähne.

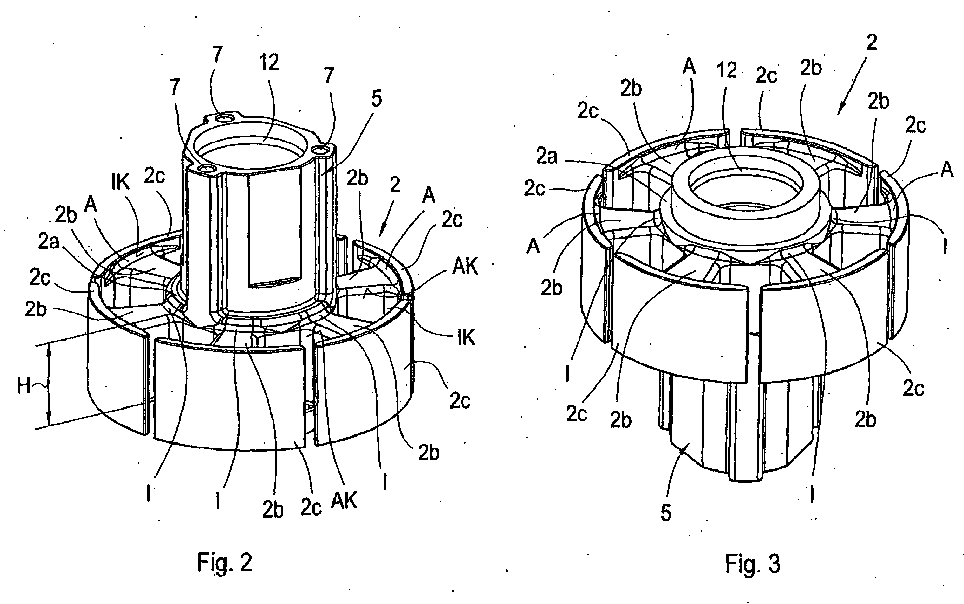

Dieser Aufbau der Stator-Tragrohr Einheit 2/5 ist auch Fig. 2 bis 4 zu entnehmen, wobei aus diesen Figuren weitere konstruktive Details zu entnehmen sind. So zeigen Fig. 2 und 3, daß jeweils eine (nur in Fig. 2 dargestellte) axiale Höhe H der speichenartig radial nach außen weisenden Wicklungsträger 2b in einem mittleren Bereich geringer sein kann als in einem radial inneren Bereich I und/oder in einem radial äußeren Bereich A, so daß die Köpfe der Wicklungen in axialer Richtung etwas versenkt sein können. Dadurch ist vorteilhafterweise eine kompaktere, axial verkürzte Bauweise des erfindungsgemäßen Motors möglich.

Am Grundkörper 2a des Stators 2, an den Wicklungsträgern 2b und/oder an den umfangsgemäß verlaufenden Endabschnitten 2c der Statorzähne befindliche Innenkanten IK und Außenkanten AK können können - wie jeweils exemplarisch in Fig. 2 bis 4 dargestellt - im Querschnitt gesehen abgerundet sein. (Die Vorteilhaftigkeit dieser Verrundungen wurde bereits vorstehend erläutert.)

Zur Fixierung der Lagerelemente 10 (Fig. 1) weist das Lagertragrohr 5 innenseitig Lageraufnahmen 12 auf. Vorteilhafterweise kann das gesamte aus den Lagerelementen gebildete System direkt in aus weichmagnetischem Pulver-Verbundwerkstoff (SMC-Material) bestehende Teile integriert werden, wobei - wie bereits erwähnt - insbesondere unter Anwendung eines Preßverfahrens zur Herstellung des weichmagnetischen Pulver-Verbundwerkstoffes, aus dem der Grundkörper 2a des Stators 2 und das Tragrohr 5 und/oder die speichenartig radial nach außen weisenden Wicklungsträger 2b und/oder die Endabschnitte 2c der Statorzähne einstückig bestehen, eine so große Genauigkeit erreicht werden kann, daß eine spanende Bearbeitung der Lageraufnahmen 12 unterbleiben kann.

Der weichmagnetische Pulver-Verbundwerkstoff, dessen Partikel mit einer dünnen, elektrisch isolierenden, sinterfähigen Schicht umgeben sind, wird unter Anwendung von - vom Grundprinzip her bekannten - pulvermetallurgischen Methoden in Form gepreßt und danach gesintert, wobei, die bei anderen Werkstücken oft üblichen Sintertemperaturen von etwa 1100 °C deutlich unterschritten werden müssen (ca. 350 bis 650 °C), um die Isolierung der Partikel nicht zu zerstören. Im Ergebnis dessen liegt allerdings auch die mechanische Festigkeit - verglichen mit den vorgenannten anderen pulvermetallurgisch hergestellten Werkstücken, wie z.B. Zahnrädern - deutlich niedriger. Der Sintervorgang verläuft unter Anwendung von Druck und Hitze, vorzugsweise unter Zusatz eines Bindemittels und/oder Schmiermittels, unter Einsatz eines Metallpulvers, wie eines Eisenpulvers, dessen Partikel jeweils die erwähnte dünne Umhüllungsschicht aufweisen, welche vorzugsweise aus einem thermoplastischen Kunststoff bestehen kann

Dabei kann der weichmagnetische Pulver-Verbundwerkstoff bevorzugt eine Dichte aufweisen, die sich durch Anwendung eines Preßdrucks im Bereich von 350 bis 850 MPa bzw. durch eine thermische Behandlung in einem Temperaturbereich von 100 bis 600 °C ergibt.

Das Statorpaket (Stator 2) kann mit Vorteil, zumindest teilweise, mit einer kathodischen Tauchlackierung (sogenannte KTL-Beschichtung) versehen sein, die eine weitere Isolierung des Statorpaketes gegenüber den Wickeldrähten unnötig macht.

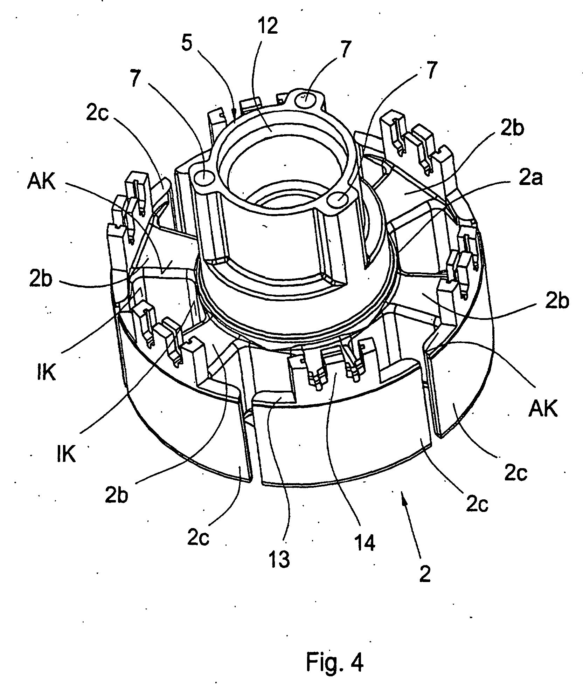

Wie die Darstellung in Fig. 4 veranschaulicht, kann alternativ oder zusätzlich der Stator 2 auf seinen beiden Stirnseiten (Endabschnitte 2c) mit einer Kunststoffumspritzung 13 versehen sein, in die weitere, bereits aus dem Stand der Technik an sich bekannte Funktionsteile 14, wie z.B. Wickelhilfen, Verschaltplätze bzw. Verschalttaschen, für die Anschlußkontakte integriert werden können.

Zusätzlich kann auch das angespritzte Lagertragrohr 5 allseitig mit einer Kunststoffschicht umgossen sein, die einerseits außenseitig sowohl Abstützelemente für eine zu montierende Leiterplatte (Elektronikmodul 4) bildet, als auch Kembohrungen zur Montage des Lagertragrohres 5 aufweisen kann, und andererseits innenseitig aufgrund der zusätzlichen Lagerisolation Lagerströme vermeidet.

Da durch die Verwendung des weichmagnetischen Pulver-Verbundwerkstoffes (SMC-Material) aufgrund der innovativen Motorkonstruktion (Verzicht auf die Nutisolation mit dadurch möglichem höheren Nutfüllfaktor) eine Verbesserung des Motorwirkungsgrades und des Geräuschverhaltens erreicht wird, ergeben sich, selbst bei einem höherem Kilopreis gegenüber herkömmlich für den Stator 2 eingesetztem Dynamoblech, noch Vorteile, da die in vielen Anwendungsfällen notwendigen, zusätzlichen und aus dem Stand der Technik bekannten Einrichtungen zur Schwingungsisolation entfallen können.

Die Erfindung ist nicht auf das darggstellte Ausführungsbeispiel beschränkt, sondern umfaßt auch alle beanspruchten Ausfürungsformen. So bestehen hinsichtlich der Art des zur Herstellung der Stator-Tragrohr-Einheit 2/5 verwendbaren weichmagnetischen Pulver-Verbundwerkstoff breite Auswahlmöglichkeiten. Hierzu wird insbesondere auf die eingangs genannten Druckschriften und auf handelsübliche Produkte wie ABM100.32, Permite 75, Somaloy™ 500 und Somaloy™ 550 der Fa. Höganäs verwiesen.

### Bezugszeichen

- 1: Motorflansch
- 2: Stator
- 2a: Grundkörper von 2
- 2b: Wicklungsträger
- 2c: Endabschnitte
- 3: Rotor
- 4: Elektronikmodul
- 5: Lagertragrohr
- 6: Schraube
- 7: Kembohrung in 5
- 8: Rotorgehäuse von 3
- 9: Rotorwelle von 3
- 10: Lagerelement
- 11: Dauermagnet
- 12: Lageraufnahme für 10 in 5
- 13: Umspritzung von 2
- 14: Funktionsteil

- A: radial äußerer Bereich von 2b
- AK: Außenkante an 2
- H: Höhe von 2b
- I: radial innerer Bereich von 2b
- IK: Innenkante an 2

## Patentansprüche

1. Außenläufermotor, wie kollektorloser Gleichstrom-Außenläufermotor, mit einem Stator (2) und mit einem den Stator (2) umschließenden Rotor (3), wobei der Stator einen zentrisch angeordneten Grundkörper (2a) aufweist, von dem radial nach außen weisende Wicklungsträger (2b) ausgehen und mit dem ein Lagertragrohr (5) zur Befestigung eines Motorflansches (1) verbunden ist, welches in seinem Inneren eine Welle (9) des Rotors (3) aufnimmt sowie innenseitig Lageraufnahmen (12) zur Fixierung von Lagerelementen (10), wie Ringen von Gleitlagern oder Wälzlagern, aufweist, wobei der zentrische Grundkörper (2a) des Stators (2), das Lagertragrohr (5) und die Wicklungsträger (2b) einstückig aus einem weichmagnetischen Pulver-Verbundwerkstoff hergestellt sind, wobei an den speichenartig radial nach außen weisenden Wicklungsträgern (2b) im wesentlichen umfangsgemäß verlaufende Endabschnitte (2c) angeformt sind, die einstückig mit den Wicklungsträgern (2b) aus dem weichmagnetischen Pulver-Verbundwerkstoff hergestellt sind und zusammen mit den Wicklungsträgern (2b) Statorzähne bilden, wobei eine axiale Höhe (H) der speichenartig radial nach außen weisenden Wicklungsträger (2b) jeweils in einem mittleren Bereich geringer als in einem radial inneren Bereich (I) und/oder in einem radial äußeren Bereich (A) ausgebildet ist,
**dadurch gekennzeichnet, daß** das Lagertragrohr (5) an einer Stirnseite domartig vom Grundkörper (2a) des Stators (2) abragt, wobei das Lagertragrohr (5) Abstützelemente für ein zwischen dem Stator (2) und dem Motorflansch (1) angeordnetes Elektronikmodul (4) ausbildet.

2. Außenläufermotor nach Anspruch 1,
**dadurch gekennzeichnet, daß** das Lagertragrohr (5) zur Befestigung des Motorflansches (1), insbesondere mittels Schrauben (6) von seiner Stirnseite ausgehende, insbesondere mit einem Gewinde versehene, Kembohrungen (7) aufweist.

3. Außenläufermotor nach Anspruch 1 oder 2,
**dadurch gekennzeichnet, daß** Innenkanten (IK) und Außenkanten (AK) am Grundkörper (2a) des Stators (2), an den Wicklungsträgern (2b) und/oder an den umfangsgemäß verlaufenden Endabschnitten (2c) der Statorzähne im Querschnitt gesehen abgerundet sind.

4. Außenläufermotor nach einem der Ansprüche 1 bis 3,
**dadurch gekennzeichnet, daß** der weichmagnetische Pulver-Verbundwerkstoff unter Anwendung von Druck und Hitze, vorzugsweise unter Zusatz eines Bindemittels und/oder Schmiermittels, aus einem Metallpulver hergestellt ist, dessen Partikel mit einer dünnen, elektrisch isolierenden, sinterfähigen Schicht umgeben sind.

5. Außenläufermotor nach einem der Ansprüche 1 bis 4,
**dadurch gekennzeichnet, daß** der Stator (2), zumindest teilweise, mit einer kathodischen Tauchlackierung versehen ist.

6. Außenläufermotor nach einem der Ansprüche 1 bis 5,
**dadurch gekennzeichnet, daß** der Stator (2), zumindest teilweise, insbesondere auf seinen beiden Stirnseiten, mit einer Kunststoffumspritzung (13) versehen ist.

7. Außenläufermotor nach Anspruch 6,
**dadurch gekennzeichnet, daß** in die Kunststoffumspritzung (13) an sich bekannte Funktionsteile (14), wie Wickelhilfen, Verschaltplätze bzw. Verschalttaschen, für die Anschlußkontakte integriert sind.

8. Außenläufermotor nach einem der Ansprüche 1 bis 7,
**dadurch gekennzeichnet, daß** das Lagertragrohr (5), insbesondere allseitig, mit einer Kunststoffschicht umgossen ist, die einerseits außenseitig Abstützelemente für eine zu montierende Leiterplatte und andererseits innenseitig eine Isolation zur Vermeidung von Lagerströmen bildet.

9. Außenläufermotor nach Anspruch 6,
**dadurch gekennzeichnet, daß** das Lagertragrohr (5) an seiner Außenseite mit einer Kunststoffumspritzung (13) versehen ist, deren Stirnseite Bohrungen, insbesondere Kembohrungen, zur Befestigung des Motorflansches (1) mittels Schrauben (6) aufweist.

## Claims

1. An external-rotor motor, such as a collector-less direct-current external-rotor motor, with a stator (2) and with a rotor (3) which encloses the stator (2), the stator having a main body (2a) which is arranged centrally and from which winding supports (2b) directed radially outwards extend and to which a bearing-support tube (5) is connected in order to fasten a motor flange (1), which bearing-support tube (5) receives a shaft (9) of the rotor (3) in its interior and has bearing receiving means (12) on the inside for fixing bearing elements (10), such as rings of sliding bearings or roller bearings, wherein the central main body (2a) of the stator (2), the bearing-support tube (5) and the winding supports (2b) are produced in one piece from a soft-magnetic powder composite material, the winding supports (2b) which are directed radially outwards in the manner of spokes having integrally formed on them end portions (2c) which extend substantially on the periphery and which are produced in one piece with the winding supports (2b) from the soft-magnetic powder composite material and together with the winding supports (2b) form stator teeth, an axial height (H) of the winding supports (2b) directed radially outwards in the manner of spokes being lower in a middle region than in a region (I) radially on the inside and/or in a region (A) radially on the outside in each case, **characterized in that** on one end face the bearing-support tube (5) projects in the manner of a dome from the main body (2a) of the stator (2), the bearing-support tube (5) forming support elements for an electronic module (4) arranged between the stator (2) and the motor flange (1).

2. An external-rotor motor according to Claim 1, **characterized in that** the bearing-support tube (5) has core bores (7), starting from its end face and, in particular, provided with a thread, in order to fasten the motor flange (1), in particular by means of screws (6).

3. An external-rotor motor according to Claim 1 or 2, **characterized in that** the internal edges (IK) and the external edges (AK) on the main body (2a) of the stator (2), on the winding supports (2b) and/or on the end portions (2c) of the stator teeth extending on the periphery are rounded as viewed in cross-section.

4. An external-rotor motor according to any one of Claims 1 to 3, **characterized in that** the soft-magnetic powder composite material is produced from a metallic powder with the application of pressure and heat, in particular with the addition of a binder and/or a lubricant, the particles of the metallic power being surrounded by a thin, electrically insulating layer capable of being sintered.

5. An external-rotor motor according to any one of Claims 1 to 4, **characterized in that** the stator (2) is provided at least in part with a cathodic immersion coating.

6. An external-rotor motor according to any one of Claims 1 to 5, **characterized in that** the stator (2) is provided at least in part, in particular on its two end faces, with plastics material (13) injected-moulded around it.

7. An external-rotor motor according to Claim 6, **characterized in that** functional parts (14) known *per se,* such as winding aids, circuitry spaces or circuitry pockets, for the terminal contacts are integrated in the plastics material (13) injected-moulded around.

8. An external-rotor motor according to any one of Claims 1 to 7, **characterized in that** the bearing-support tube (5) has a layer of plastics material cast around it, in particular on all sides, the layer of plastics material forming support elements on the outside for a printed-circuit board to be assembled on the one hand and an insulator on the inside to prevent bearing currents on the other hand.

9. An external-rotor motor according to Claim 6, **characterized in that** the bearing-support tube (5) is provided on its outside with plastics material (13) injected-moulded around it, the end face of which has bores, in particular core bores, for fastening the motor flange (1) by means of screws (6).

## Revendications

1. Moteur à induit extérieur, tel qu'un moteur à induit extérieur à courant continu sans collecteur, comportant un stator (2) et un rotor (3) entourant le stator (2), le stator (2) comportant un corps de base (2a) agencé au centre, à partir duquel partent des porte-bobinages (2b) orientés radialement vers l'extérieur et auquel est relié un support de palier tubulaire (5), qui est destiné à la fixation d'une flasque du moteur (1) et qui reçoit dans sa partie intérieure un arbre (9) du rotor (3) et comporte sur la face intérieure des logements (12) pour la fixation d'éléments de palier (10), tels que des bagues de paliers lisses ou de paliers à roulements, le corps de base (2a) centré du stator (2), le support de palier tubulaire (5) et les porte-bobinages (2b) étant réalisés d'un seul tenant dans un matériau composite magnétique doux à base de poudre, des tronçons d'extrémité (2c) sensiblement périphériques étant formés contre les porte-bobinages (2b), orientés radialement vers l'extérieur en forme de rayons, et étant réalisés d'un seul tenant avec les porte-bobinages (2b) en matériau composite magnétique doux à base de poudre en formant conjointement avec les porte-bobinages (2b) des dents de stator, une hauteur axiale (H) des porte-bobinages (2b), orientés radialement vers l'extérieur en forme de rayons, étant plus faible dans une zone centrale que dans une zone radialement intérieure (I) et/ou dans une zone radialement extérieure (A), **caractérisé en ce que** le support de palier tubulaire (5) s'élève en forme de tourillon sur une face frontale du corps de base (2a) du stator (2), le support de palier tubulaire (5) formant des éléments d'appui pour un module électronique (4) agencé entre le stator (2) et la flasque du moteur (1).

2. Moteur à induit extérieur selon la revendication 1, **caractérisé en ce que** le support de palier tubulaire (5), destiné à la fixation d'une flasque du moteur (1), en particulier au moyen de vis (6) en partant de sa face frontale, comporte des trous borgnes cylindriques (7) munis en particulier d'un filetage.

3. Moteur à induit extérieur selon la revendication 1 ou 2, **caractérisé en ce que** des arêtes intérieures (IK) et des arêtes extérieures (AK) sur le corps de base (2a) du stator (2), sur les porte-bobinages (2b) et/ou sur les tronçons d'extrémité périphériques (2c) sont arrondies, par référence à une coupe transversale.

4. Moteur à induit extérieur selon l'une quelconque des revendications 1 à 3, **caractérisé en ce que** le matériau composite magnétique doux à base de poudre est réalisé moyennant l'application de pression et de chaleur, en particulier moyennant l'addition d'un liant et/ou d'un lubrifiant, à partir d'une poudre métallique dont les particules sont enveloppées d'une mince couche isolante électrique, apte à être frittée.

5. Moteur à induit extérieur selon l'une quelconque des revendications 1 à 4, **caractérisé en ce que** le stator (2), au moins partiellement, est muni d'un revêtement cathodique verni par immersion.

6. Moteur à induit extérieur selon l'une quelconque des revendications 1 à 5, **caractérisé en ce que** le stator (2), au moins partiellement, en particulier sur ses deux faces frontales, est muni d'un enrobage en matière plastique (13).

7. Moteur à induit extérieur selon la revendication 6, **caractérisé en ce que** des éléments fonctionnels (14), connus en soi, tels que des auxiliaires de bobinage, des emplacements de connexion ou des poches de connexion, pour les contacts de connexion sont intégrés dans l'enrobage en matière plastique (13).

8. Moteur à induit extérieur selon l'une quelconque des revendications 1 à 7, **caractérisé en ce qu'**une couche de matière plastique, qui forme, d'une part sur la face extérieure, des éléments d'appui pour une plaquette de circuits imprimés à mettre en place et, d'autre part sur la face intérieure, une isolation destinée à empêcher les courants parasites de palier, est coulée autour du support de palier tubulaire (5), de préférence de toutes parts.

9. Moteur à induit extérieur selon la revendication 6, **caractérisé en ce que** le support de palier tubulaire (5) est muni sur sa face extérieure d'un enrobage en matière plastique (13), dont la face frontale comporte des trous borgnes, de préférence des trous borgnes cylindriques pour la fixation de la flasque du moteur (1) au moyen de vis (6).
